(19) Europäisches Patentamt
European Patent Office
Office européen des brevets

(11) **EP 2 956 014 B1**

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(21) Anmeldenummer: **14703894.7**

(22) Anmeldetag: **12.02.2014**

(51) Int Cl.:
***A23L 5/10*** (2016.01)

(86) Internationale Anmeldenummer:
**PCT/EP2014/052751**

(87) Internationale Veröffentlichungsnummer:
**WO 2014/124984 (21.08.2014 Gazette 2014/34)**

(54) **VERFAHREN UND VORRICHTUNG ZUR BERECHNUNG DER GESAMTDAUER VON GARPROZESSEN VON LEBENSMITTELN SOWIE GARVERFAHREN**

METHOD AND DEVICE FOR CALCULATING THE TOTAL DURATION OF COOKING PROCESSES OF FOOD, AND COOKING METHOD

PROCÉDÉ ET DISPOSITIF POUR CALCULER LA DURÉE TOTALE DE PROCESSUS DE FERMENTATION D'ALIMENTS ET PROCÉDÉ DE FERMENTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.02.2013 DE 102013002476**

(43) Veröffentlichungstag der Anmeldung:
**23.12.2015 Patentblatt 2015/52**

(73) Patentinhaber: **WMF Group GmbH 73312 Geislingen/Steige (DE)**

(72) Erfinder: **SCHOBLOCH, Jochen 88422 Bad Buchau (DE)**

(74) Vertreter: **Pfenning, Meinig & Partner mbB Patent- und Rechtsanwälte Theresienhöhe 11a 80339 München (DE)**

(56) Entgegenhaltungen:
**EP-A1- 1 927 810      EP-A1- 1 988 453
EP-A1- 2 031 306      DE-A1-102007 040 316**

**Beschreibung**

Die vorliegende Erfindung betrifft ein Verfahren, dass es erlaubt, die ideale Gardauer von Lebensmitteln bei einem Garvorgang mit Wasserdampf zu bestimmen. Zudem betrifft die Erfindung ein Garverfahren für Lebensmittel, bei der die jeweiligen Lebensmittel für die vorbestimmte Gardauer gegart werden.

Herkömmliche Dämpfertechnik kann unterteilt werden in Segmente, beginnend bei Dämpfen in Körben, z. B. Bambuskörben, welches üblicherweise in F.O. häufig angewandt wird, bis hin zu automatisierten Großküchengeräten zum Dämpfen mit Menüführung.

Allen Geräten und Verfahren jedoch ist gemein, dass keine individuelle Beeinflussung der Gardauer erfolgt aufgrund von persönlichen Einstellungen. Bei nicht automatisierten Systemen muss der Benutzer die Gardauer ermitteln durch Nachschlagen oder Erfahrungswerten, welche jedoch meist in einem bestimmten Zustand der gewünschten zu dämpfenden Zutat vorliegt. Beispielhaft sei die Kartoffel erwähnt, welche unterschiedliche Gardauern aufweist abhängig von deren Größe und Oberflächenbeschaffenheit, deren Ausgangstemperatur, der maximal zu erzielenden Dämpftemperatur des Garwunsches und der Sorte.

Dämpfsysteme, welche lediglich Wasser unter atmosphärischen Bedingungen zum Sieden bringen und mit Wasserdampf die zu dämpfenden Lebensmittel umgeben, weisen oft keine Möglichkeit der Korrektur der Gardauern, abhängig der geographischen Höhe über dem Meer auf. Die damit verbundene Ungenauigkeit bei geringen Höhenunterschieden kann mit Erfahrungswerten kompensiert werden. Werden jedoch größere Höhenunterschiede aufgetan vom Ort der Ermittlung des Bezugswertes/Literaturwertes der Gardauer und des tatsächlichen Ortes, an welchem gegart wird, auch in Kombination mit großen Lebensmitteln und langandauernden Gardauern, so sind die Ergebnisse des Garens oft mangelhaft, da keine empirischen Werte zur Korrektur der Gardauer ohne großen Nachschlageaufwand vorliegen. Der beschriebene Effekt beruht auf dem Absolutdruckunterschied der Atmosphäre, abhängig von dem Höhenunterschied der beiden erwähnten Orte.

Übliche bewohnte Höhen bezogen auf den Meeresspiegel sind von -422m, also 422m unter dem Meeresspiegel (Ufer des Toten Meeres), bis ca. 5100m über dem Meeresspiegel (La Rinconada in Peru & Wenzhuan in China; die beiden höchsten Städte der Erde). Die Siedepunkte von reinem Wasser betragen hierbei 101,4°C bzw. 83°C bei relativem Normaldruck von 1013,25mbar rel.

Übliche Hochdrucklagen bzw. Tiefdrucklagen beeinflussen den atmosphärischen Druck um ca. +- 20mbar. Diese Druckänderung ist mit einer Temperaturänderung des siedenden Wassers bei 0m über dem Meer von ca. +- 0,4°C gleichzusetzen.

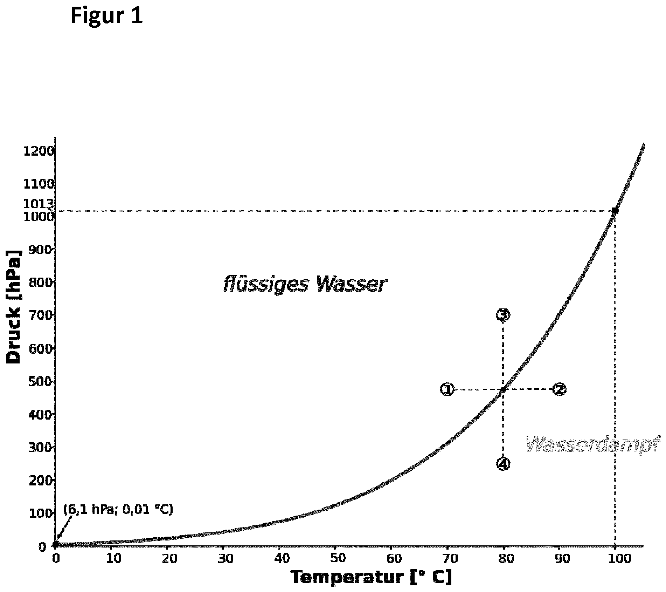

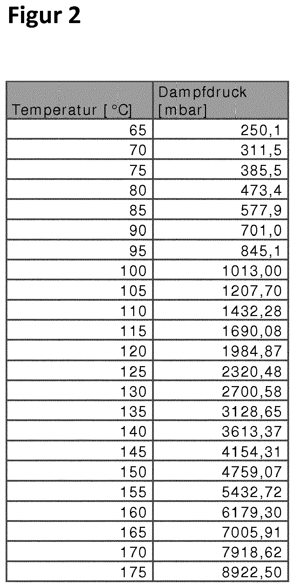

Ist das Wasser jedoch unter signifikant höherem Druck, z. B. im Dampfdruckkochtopf, ist die Temperaturdifferenz bei gleicher Druckdifferenz geringer. Umgekehrt ist bei signifikant geringerem Druck, z. B. im Unterdruckbehälter, die Temperaturdifferenz bei gleicher Druckdifferenz größer. Entsprechende Zusammenhänge sind z.B. in der beigefügten Figur 1 sowie in der in Figur 2 abgebildeten Tabelle dargestellt.

Die Angabe, welche Temperatur das zu garende Lebensmittel vor dem Garvorgang inne hat, wird bei vorgenannten Dämpfern ebenso nicht ermittelt oder zur Korrektur der Zeiten herangezogen. Dabei sind besonders bei großen und langdauernden Garvorgängen mangelhafte Ergebnisse zu erwarten.

Werden unterschiedlich große Stücke bezüglich des Bezugswertes/Literaturwertes des zu garenden Lebensmittels verwendet, so ist auch hier das Garergebnis oft mangelhaft, da die Gardauer bei ansonsten identischen Bedingungen mit der Stückgröße zunimmt.

Werden unterschiedliche Garwünsche bezügliche des Bezugswertes/Literaturwertes des zu garenden Lebensmittels gewünscht, so ist die oft Personenspezifisch und stark abhängig von den persönlichen Vorlieben und Zielsetzungen desjenigen, welcher die Bezugswerte/Literaturwerte ermittelt hat. Ökotrophologen zum Beispiel werden einen Zustand, an welchem das zu garende Lebensmittel gar ist, anders definieren als jemand, welcher den Geschmack Vieler treffen muss, z. B. Kantinenköche

Ausgehend hiervon ist es daher Aufgabe der vorliegenden Erfindung, ein Verfahren anzugeben, das die Ermittlung von Gardauern von Lebensmitteln bei einem Dampfgarverfahren unter Verwendung von einem oder mehreren benutzerspezifischen Einstellungen ermöglicht, um ein möglichst optimales und mit den Garwünschen deckungsgleiches Garergebnis zu erhalten. Zudem ist es Aufgabe der vorliegenden Erfindung, ein entsprechendes Garverfahren für die Garung von Lebensmitteln mittels Wasserdampf anzugeben.

Diese Aufgabe wird bezüglich eines Verfahren zur Berechnung der Gesamtdauer von Garprozessesen mittels Wasserdampf mit den Merkmalen des Patentanspruchs 1, sowie hinsichtlich eines Dampfgarprozesses von Lebensmitteln mit den Merkmalen des Patentanspruchs 10 gelöst, wobei die jeweilig abhängigen Patentansprüche vorteilhafte Weiterbildungen darstellen.

Erfindungsgemäß wird somit ein Verfahren zur Berechnung der Gesamtdauer $t_{ges}$ des Garprozesses von Lebensmitteln mittels Garens durch Wasserdampf angegeben, bei dem die Gesamtdauer des Garprozesses gemäß:

$$t_{ges} = t_{kond} + t_{gar}$$

bestimmt wird. Hierbei bedeuten $t_{kond}$ eine Konditionierungzeit des Lebensmittels, die dann beendet ist, wenn die Kerntemperatur des Lebensmittels, ausgehend von einer Ausgangstemperatur $v_{Ausgangs}$ auf eine Mindestgartemperatur $v_{min}$, bei der der Garprozess für das jeweilige Lebensmittel einsetzt, erhöht wurde,
und $t_{gar}$ eine Garzeit des Lebensmittels, die in Abhängigkeit vom gewünschten Garzustand gewählt wird.

Mit dem erfindungsgemäßen Verfahren lassen sich somit die Präzision und die benutzerspezifische Einstellbarkeit von Garprozessen auf einfache Art und Weise realisieren, indem man die "Garzeit" aufteilt. Zum einen in eine "Konditionierungszeit" und in eine eigentliche "Garzeit". Die hier und im Folgenden beschriebene Garzeit ist nicht deckungsgleich der weitläufig verwendeten Garzeit, die vom Einlegen eines Lebensmittels in eine Dämpfumgebung bis zum Erreichen des gewünschten Gargrades nötig ist.

Die Summenzeit, welche die zu garende Zutat folglich in der Dämpfumgebung sein sollte um ein vorher gewähltes Ergebnis bei eingestellten Faktoren ist somit gemäß der oben genannten Gleichung definiert

Das erfindungsgemäße Verfahren zeichnet sich somit dadurch aus, dass zwischen einer Konditionierungszeit und einer Garzeit unterschieden wird. Während der Konditionierungszeit bzw. für die Dauer dieser Zeit erfolgt somit zunächst die Konditionierung, d.h. Erwärmung des jeweiligen Lebensmittels von der Ausgangstemperatur $v_{Ausgangs}$ des Lebensmittels vor Beginn der Konditionierung auf die notwendige Gartemperatur, bei der der Garprozess einsetzt. Die Konditionierungszeit ist dann beendet, wenn der Kern des Lebensmittels die notwendige Gartemperatur erreicht hat.

Bei zu garenden Lebensmitteln ist besonders wichtig, dass nicht nur die äußeren Bereiche eines Lebensmittels gar sind, sondern auch der Kern. Hierfür muss die Umgebungstemperatur der Dämpfumgebung, üblicherweise Siedepunkt des Wassers, das Lebensmittel von außen kommend nach innen erwärmen.

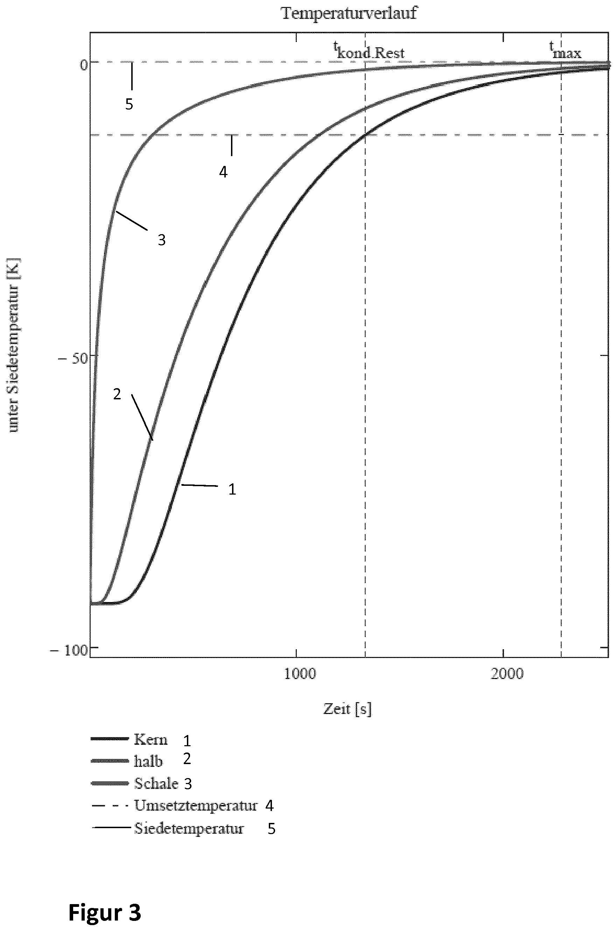

Ein typischer Wärmeverlauf über der Zeit und abhängig von der Position in dem zu garenden Lebensmittel ist in Figur 3 gezeigt. Die drei dargestellten Kurven zeigen den Temperaturverlauf der Schale, des Kerns und eines Bereiches dazwischen.

Abhängig vom Lebensmittel und dessen meist sehr komplexen Zusammensetzung beginnt das Garen bei jeweils unterschiedlichen Temperaturen. So sei z.B. erwähnt, dass grüne Bohnen keinerlei Lebensmitteltechnische Umsetzung erfahren, die man als garen bezeichnet, wenn unter atmosphärischen Bedingungen Temperaturen unter 90-95°C herrschen. Selbst nach mehreren Stunden sind die grünen Bohnen nicht gar. Wird die umgebende Temperatur erhöht, tritt eine lebensmitteltechnische Umsetzung einiger Bestandteile der grünen Bohne auf, sodass diese nach bestimmter Zeit gar ist. Diese Temperatur ist im Folgenden die Mindestumsetztemperatur $v_{min}$.

Erreicht der Kern folglich diese Temperatur $v_{min}$, beginnt der Garvorgang im Kern. Bis die Umgebungstemperatur im Garvorgang den Kern des zu garenden Lebensmittels auf $v_{min}$ angehoben hat ist abhängig von lebensmittelspezifischen, physikalischen Größen. $v_{min}$ kann für jedes Lebensmittel anhand einfacher Experimente ermittelt werden.

Zudem hängt die Konditionierzeit vor allem von der Größe, Höhe oder Durchmesser des Lebensmittels, je nach Form, der Masse sowie der Ausgangstemperatur ab. Aber auch die Wärmeleitfähigkeit, die Wärmekapazität, die oberflächenabhängigen Temperaturübergangswiderstände und die Dichte des Lebensmittels oder die Siedetemperatur des Wassers bei gegebenem äußeren Druck tragen hierzu bei. Bevorzugt gehen diese Parameter daher ebenso in die Bestimmung der Konditionierzeit mit ein.

Der Beginn des eigentlichen Garens des Lebensmittels setzt somit erst dann ein, wenn der Kern die hierfür notwendige Mindestgartemperatur $v_{min}$ erreicht hat. Die Garzeit $t_{gar}$ entspricht somit derjenigen Zeitdauer, die das Lebensmittel bevorzugt bei den gleichen Bedingungen, wie sie bei der Konditionierung vorlagen, braucht, bis es den gewünschten Garzustand erreicht. Die Garzeit $t_{gar}$ kann somit in Abhängigkeit von der Art, der Größe des Lebensmittels, des Siedepunktes des Wassers bei gegebenem äußeren Druck, oder eine Kombination mindestens zweier oder sämtlicher der zuvor genannten Parameter bestimmt sein.

Mögliche Einstellungen sowohl bei der Bestimmung der Konditionierzeit als auch der Garzeit sind die geografische Höhe, den vorherrschenden relativen Atmosphärendruck, der Siedepunkt von Wasser, die Ausgangstemperatur der zu garenden Zutat, die Oberflächenbeschaffenheit der zu garenden Zutat, die Größe, Höhe oder den Durchmesser der zu garenden Zutat, die Masse der zu garenden Zutat, die Sorte der zu garenden Zutat, den Gargrad, Garwunsch oder Textur der zu garenden Zutat. Diese Parameter können beispielsweise empirisch ermittelt bzw. auch vorgegeben werden.

Der Konditioniervorgang und/oder der Garprozess als solches können hierbei unter atmosphärischem Druck, als auch unter auferlegtem Druck, z.B. im Dampfdruckkochtopf oder unter Unterdruckbedingungen erfolgen.

Der Garprozess findet vor Allem durch das Verdampfen von Wasser statt. Dabei können dem Wasser wenige Volumenprozente anderer Stoffe wie Öle oder Aromastoffe, z.B. Geruchs- und Geschmacksstoffe beigemischt sein.

Bevorzugt kann zur Gesamtdauer $t_{ges}$ des Garprozesses eine Haltezeit $t_{halt}$ addiert werden, die bevorzugt zwischen 10 und 600 Sekunden, besonders bevorzugt zwischen 120 und 300 Sekunden gewählt wird. Bevorzugt werden während der Haltezeit die gleichen Bedingungen wie während der Garung und/oder der Konditionierung eingehalten. Die Haltezeit ist somit ein additiver Zeitwert, der die Gesamtzeit verlängert, unabhängig von jeglicher Beeinflussung. Bei vielen Lebensmitteln ist dieser Wert jedoch 0, da mit den beiden oben beschriebenen Zeiten das Verhalten des Lebensmittels hinreichend genau beschrieben ist. Dieser Wert ist bei Fleisch, Fisch und Geflügelprodukten aus hygienischen Gründen zur sicheren Abtötung von Erregern größer 0, jedoch nicht zwingend.

Gemäß einer besonders bevorzugten Ausführungsform wird die Konditionierzeit genau berechnet. Hierzu wird die Konditionierzeit $t_{kond}$ wie nachfolgend definiert:

$$t_{kond} := -\ln\left(\frac{1}{2} \cdot \frac{\upsilon_{min} - \upsilon_{SP}}{\upsilon_{Ausgangs} - \upsilon_{SP}}\right) \cdot \frac{1}{D}$$

wobei

$\upsilon_{Ausgangs}$     die Ausgangstemperatur des Lebensmittels vor Beginn des Garprozesses,
$\upsilon_{min}$     die Mindestumsetztemperatur,
$\upsilon_{SP}$     die Siedetemperatur des Wassers bei gegebenem äußerem Druck p und
$D$     eine lebensmittelspezifische Konstante gemäß

$$D := \pi^2 \cdot \frac{1}{c \cdot \rho} \cdot \left(\frac{1}{R_{se} \cdot r_0 + \frac{r_0^2}{\lambda}}\right)$$

darstellt, wobei

$c$     die spezifische Wärmekapazität des Lebensmittels,
$\rho$     die Dichte des Lebensmittels,
$\lambda$     die Wärmeleitfähigkeit des Lebensmittels,
$R_{se}$     der Wärmeübergangswiderstand der Oberfläche des Lebensmittels und
$r_0$     die größte dimensionale Abmessung des Lebensmittels von einem Mittelpunkt, einer Mittelllinie oder einer Mittelebene bedeutet.

Gemäß der voranstehenden Methode kann mit großer Genauigkeit die Dauer der Konditionierungszeit $t_{kond}$ bestimmet werden, bis der Kern die Mindestgartemperatur erreicht hat. Mit diesem Werten kann folglich in der voranstehend beschriebenen Gleichung exakt berechnet werden, zu welchem Zeitpunkt im Kern eine bestimmte Temperatur, insbesondere die Mindestumsetztemperatur $v_{min}$, d.h. die minimale Temperatur, bei der der Garvorgang einsetzt, vorherrscht.

Die Konditionierungszeit $t_{kond}$ ist die Zeit die vergeht, biss der Kern der Zutat eine Mindestumsetztemperatur $v_{min}$ erreicht hat. Diese Mindestumsetztemperatur $v_{min}$ ist die unterste Grenztemperatur, bei welcher ein Lebensmittel sowie von der Textur, als auch geschmacklich gar wird. Da Lebensmitte einen äußerst komplexen chemischen Aufbau haben, sind alle Werte oftmals abweichend von anderen Lebensmitteln, selbst wenn man aufgrund von optischer oder nährwertspezifischer Ähnlichkeit dies nicht vermutet.

Wenn z.B. eine Kartoffel gehobelt gegart wird und eine Kartoffel mit einem kleinsten Durchmesser von ca. 7cm gegart wird ist auf jeden Fall klar, dass die Temperatur im Kern der jeweiligen Zubereitungsart (gehobelt vs. Ø7cm) nach gleicher Zeit bei gleichen Ausgangsbedingungen nicht identisch ist.

Die Temperatur muss in den Kern hinein transportiert werden. Hierzu ist ein Modell hilfreich, das sowohl einfach genug, als auch präzise genug ist. Hierzu ist die Wärmeleitungsgleichung eine Kugelsphäre als Basis verwendet worden, welche Mittel einer Reihenzerlegung als Summe dargestellt werden kann.

Die Parameter der oben stehenden Gleichung für die Konditionierzeit $t_{kond}$ sind sowohl zutatenspezifisch, als auch von der Umgebung und den Einstellungen des Benutzers abhängig.

Hierbei kommt dem Parameter $r_0$ eine besonders wichtige Rolle zu, denn der gibt die Größe des zu garenden Lebensmittels an. Dieser wird bevorzugt mit einem der Grundgleichung entsprechenden Modell erläutert.

In einer beispielhaften Annahme um handelt es sich um die Wärmeleitung in einer Kugel, dies kann z.B. an kugeligen Lebensmitteln dargestellt werden. Hierfür wird, je nach Form des zu garenden Lebensmittels, eine Mittenebenen, eine Mittellinie oder einen Mittelpunkt bestimmt. Auf diesen Mittenelementen werden die Kugelsphären aufgesetzt

und deren Radius $r_0$ sukzessive erhöht, bis jegliche Sphäre die Oberfläche durchstoßen hat. Hierdurch wird $r_0$ ermittelt. Diese Verfahren zur Bestimmung von $r_0$ kann in analoger Weise auch auf andere geometrische Formen von Lebensmittel übertragen werden. Bei eine sich zur Spitze verjüngenden Karotte bestimmt sich $r_0$ z.B. als Radius des dicken Endes, bei einem Filet ist dies die halbe Höhe.

Die gemittelten physikalischen Eigenschaften des Lebensmittels wie die spezifische Wärmeleitfähigkeit $\lambda$, die Dichte p, den äußeren Wärmeübergangswiderstand $R_{se}$ und spezifische Wärmekapazität c können in der Literatur nachgeschlagen werden, sofern diese Werte vorliegen. Ansonsten können diese Werte im Labor ermittelt werden und den jeweiligen Lebensmitteln zugewiesen werden.

Die Ausgangstemperatur $v_{Ausgangs}$ des Lebensmittels entspricht der Temperatur des Lebensmittels zum Zeitpunkt, an welchem es der erhitzten Dämpfumgebung zugeführt wird. Üblicherweise können hier Temperaturen des Kühlschrankes oder verallgemeinert, des Aufenthaltsortes des Lebensmittels angenommen werden.

Die Einstellbarkeit des Benutzers hinsichtlich Größe, Ausgangstemperatur, Lebensmittelcharakteristik, Siedepunkt des Garvorganges ist somit in zuvor nicht möglich gewesener Präzision gegeben.

Bevorzugt wird für die Ermittlung der Konditionierungszeit $t_{kond}$ der Schnittpunkt des Temperaturverlaufes im Kern mit der Mindesttemperatur $v_{min}$ des Lebensmittels, wie in Figur 3 dargestellt, berechnet.

Die Garzeit $t_{gar}$ ist die Zeit die vergeht, ab dem der Kern des zu garenden Lebensmittels die Mindestumsetztemperatur $v_{min}$ erreicht hat und bis zum Erreichen des vom Benutzer eingestellten Garwunsches andauert. Die Garzeit bzw. Gardauer $t_{gar}$ kann durch Beeinflussung des gewünschten Garzustandes des zu garenden Lebensmittels verlängert oder verkürzt werden.

Besonders bevorzugt ist hierbei, wenn die Garzeit $t_{gar}$ gemäß

$$t_{gar} := \frac{t_{Bezug}}{\left[ \left( \frac{1}{Q_{10}} \right)^{\left( v_{Bezug} - v_{SP} \right)} \right]^{\frac{1}{10}}} \cdot \text{Garzustand}$$

definiert ist, wobei

$v_{Bezug}$      eine Bezugstemperatur bedeutet, bei der für ein gegebenes Lebensmittel ein ansprechendes Garergebnis erzielt wird,

$t_{Bezug}$      eine Bezugszeitdauer bedeutet, bei der für ein gegebenes Lebensmittel ein ansprechendes Garergebnis erzielt wird, und

Garzustand      mit 0,1 < Garzustand < 10, bevorzugt 0,2 < Garzustand < 5 definiert ist.

$Q_{10}$ ist dabei weiter unten stehend erläutert und definiert.

Der Exponent für $Q_{10}$ ist dabei dimensionslos, d.h. die Differenz ($v_{Bezug}$ - $v_{SP}$) wird mit der Dimension 1/K (K = Kelvin) multipliziert.

Die Bezugstemperatur $v_{Bezug}$ sowie die Bezugszeit bzw. Bezugszeitdauer $t_{Bezug}$ stellen dabei für ein jeweiliges Lebensmittel empirisch ermittelte Werte dar, bei denen das jeweilige Lebensmittel einen optimalen Garzustand erreicht. Diese Werte können für ein jeweiliges Lebensmittel anhand von Garversuchen im Labor durchgeführt und tabellarisch erfasst bzw. katalogisiert werden.

Die Reaktionsgeschwindigkeit von Lebensmitteln wird in der Literatur üblicherweise als $Q_{10}$-Wert angegeben. $Q_{10}$ ist hierbei gemäß

$$Q_{10} := e^{-10 \cdot \frac{\ln\left( \frac{t_{Bezug.HT}}{t_{Bezug.NT}} \right)}{\left( v_{Bezug.HT} - v_{Bezug.NT} \right)}}$$

definiert, wobei

$t_{Bezug.HT}$      die Zeitdauer definiert, nach der ein ansprechendes Garergebnis eines bestimmen Lebensmittels bei einer hohen Temperatur erreicht wird,

$t_{Bezug.NT}$ die Zeitdauer definiert, nach der ein ansprechendes Garergebnis eines bestimmen Lebensmittels bei einer niederen Temperatur erreicht wird,

$v_{Bezug.HT}$ die hohe Temperatur definiert, bei der $t_{Bezug.NT}$ bestimmt wird, und

$v_{Bezug.NT}$ die niedere Temperatur definiert, bei der $t_{Bezug.NT}$ bestimmt wird.

Auch hier ist der Exponent dimensionslos, d.h. die erhaltenen Werte werden mit der dimensionalen Größe K (Kelvin) multipliziert.

$t_{Bezug.HT}$ ist die Zeitspanne bei der ein ansprechendes Garergebnis eines bestimmten Lebensmittels erreicht wird bei einer hohen Temperatur (dies ist je nach Lebensmittel entweder die max. Gartemperatur für die das Lebensmittel geeignet ist oder die Siedetemperatur; z. B. können Kartoffeln bei sehr hohen Temperaturen [Überdruck] gegart werden wohingegen empfindliche Lebensmittel wie z.B. Lachs nicht bei Siedetemperatur [bei 1013mbar] gegart werden sollten sondern darunter)

$t_{Bezug.NT}$ ist die Zeitspanne bis zu der ein ansprechendes Garergebnis bei niedriger Temperatur erreicht wird ($v_{Bezug.NT}$). $t_{Bezug.NT}$ kann z.B. als die niedrigste Temperatur definiert sein, bei der der Garvorgang in einem jeweiligen Lebensmittel einsetzt.

$v_{Bezug.HT}$ ist die hohe Temperatur (wie oben beschrieben entweder Siedetemperatur oder die für das Lebensmittel maximal geeignete Temperatur)

$v_{Bezug.NT}$ ist die Temperatur bei der noch ein Garvorgang stattfindet (=signifikant niedrigere Temperatur wie $v_{Bezug.HT}$)

Auch diese Werte ($t_{Bezug.HT}$, $t_{Bezug.NT}$, $v_{Bezug.HT}$, sowie $v_{gezug.NT}$) können mittels geeigneter Versuche empirisch ermittelt und für jedes Lebensmittel katalogisiert werden.

Der $Q_{10}$-Wert besagt, dass eine Veränderung der Umgebungstemperatur von 10K eine diesem Wert entsprechende reziproke Verlängerung oder Verkürzung der Gesamtgardauer entspricht.

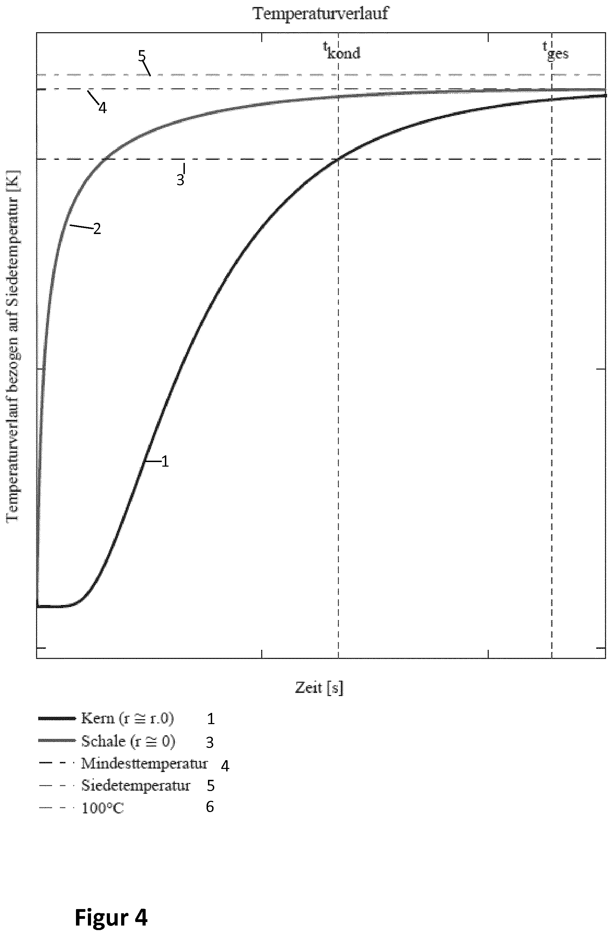

Die Bestimmung der Garzeit wird beispielhaft anhand Figur 4 dargestellt. Im in Figur 4 dargestellten Diagramm ist die Garzeit $t_{gar}$ die Zeit zwischen $t_{kond}$ und $t_{ges}$. Lediglich die Garzeit verändert sich nach den bereits bekannten Gleichungen abhängig von der Umgebungstemperatur.

Ergänzend ist der multiplikative Faktor des gewünschten Garzustandes. Dadurch lässt sich jeder Garvorgang verkürzen oder verlängern, je nach Wunsch des Benutzers. Dabei entspricht ein Garzustand mit dem Wert 1 einem vordefinierten idealen Garzustand. ein Garzustand < 1 bedeutet demnach, dass das Lebensmittel nicht vollständig durchgegart ist, ein Garzustand > 1, dass eine Garung bis über den idealen Zustand hinaus stattgefunden hat.

Will ein Benutzer z.B. Kartoffeln zu Rösti weiterverarbeiten, dürfen diese nicht ganz durchgegart sein (Garzustand < 1). Will er jedoch die Kartoffeln zu Stampfkartoffeln weiterverarbeiten, sollten diese übergar und somit weich sein (Garzustand > 1).

Beispielsweise kann der Garzustand so gewählt werden, dass gilt:

$$0,1 < \text{Garzustand} < 10, \text{ bevorzugt } 0,5 < \text{Garzustand} < 2$$

Der gegebene äußere Druck p kann so gewählt sein, dass er dem atmosphärischen Druck bei gegebener Meereshöhe p(h) entspricht. Das Verfahren kann aber auch bei anderen Drücken, beispielsweise Überdruck, wie er in einem Dampfkochtopf herrscht oder bei Unterdruck durchgeführt werden. Bevorzugte Überdrücke, d.h. gegenüber Normalbedingungen erhöhten Drücken liegen dabei bei 1013 mbar < p < 5 bar, bevorzugt bei 1,8 bar < p < 2,2 bar, z.B. bei 2bar.

Bevorzugt Unterdrücke sind dabei gegenüber Normalbedingungen erniedrigte Drücke, bevorzugt 700 mbar < p < 1013 mbar, weiter bevorzugt 800 mbar < p < 950 mbar.

Falls das Verfahren bei Atmosphärendruck durchgeführt wird kann der Siedepunkt von Wasser kann über die Höhe über dem Meer ermittelt werden. Hierbei wird zunächst über die internationale Höhenformel

$$p(h) = 1013{,}25 \left(1 - \frac{0{,}0065 \cdot h}{288{,}15}\right)^{6{,}255} \text{hPa}$$

ein Absolutdruck ermittelt, welcher der angegebenen Höhe unter relativem Normaldruck entspricht. Anhand des berechneten Drucks kann dann weiter der Siedepunkt des Wassers $v_{SP}$ bestimmt werden, z.B. über die Clausius-Clapeyron-Beziehung oder anhand tabellarischer Werte (siehe Figur 2).

Die vorliegende Erfindung kann mit einer Vorrichtung berechnet werden, die programmtechnisch zur Durchführung des erfindungsgemäßen Verfahrens ausgelegt ist. Die Vorrichtung kann beispielsweise ein Computer, ein PC, ein Tablet, ein Handy mit entsprechender Software, die das voranstehende Verfahren ermöglicht, sein. Die Software kann beispielsweise eine Applikation ("App") sein.

Weiterhin betrifft die Erfindung ein Verfahren zum Garen von Lebensmitteln mittels Wasserdampf, bei dem die Gesamtdauer $t_{ges}$ des Garprozesses gemäß einem oben beschriebenen Verfahren berechnet und die Lebensmittel genau oder zumindest für die Zeitdauer $t_{ges}$ oder $t_{ges} + t_{hall}$ gegart werden.

Dieses Garverfahren kann in einer Garvorrichtung durchgeführt werden, die mittels einer voranstehend beschriebenen Vorrichtung zur Berechnung der Gesamtdauer $t_{ges}$ des Garprozesses gesteuert wird, wobei die Vorrichtung zur Berechnung der Gesamtdauer nach Erreichen der Zeitdauer $t_{ges}$ oder $t_{ges} + t_{halt}$ der Garvorrichtung ein Signal zur Beendigung des Garvorganges erteilt und die Garvorrichtung den Garvorgang beendet.

Die Garvorrichtung kann im einfachsten Fall ein Herd sein, der einen Kochtopf beheizt, in dem der Garvorgang der Lebensmittel durchgeführt wird. Ebenfalls ist ein autarkter Dampfgarer denkbar. Die Vorrichtung zur Berechnung der Gesamtdauer $t_{ges}$ des Garprozesses kann nach Erreichen der Zeitdauer $t_{ges}$ oder $t_{ges} + t_{halt}$ z.B. die Garvorrichtung abschalten. Ebenso kann die Vorrichtung zur Berechnung der Gesamtdauer $t_{ges}$ des Garprozesses nach Erreichen der Zeitdauer $t_{ges}$ oder $t_{ges} + t_{halt}$ ein Signal, z.B. ein akustisches und/oder optisches Signal geben, das dem Benutzer die Beendigung des Garvorganges anzeigt.

Die vorliegende Erfindung wird zusätzlich anhand der nachfolgenden Erläuterungen zur Berechnung der in den Figur 3 und 4 dargestellten Grafiken näher erläutert.

Der berechnete Verlauf ist mittels folgender Gleichung in 100 Schritten berechnet worden.

$$\upsilon(r,t) := \frac{2 \cdot \Delta\upsilon \cdot r_0}{r \cdot \pi} \cdot \sum_i \left[ \frac{(-1)^{i+1}}{i} \cdot \sin\left(i \cdot \pi \cdot \frac{r}{r_0}\right) \cdot e^{-i^2 \cdot \frac{\pi^2}{c \cdot \rho \cdot r_0} \cdot \left(\frac{1}{R_{se} + \frac{r_0}{\lambda}}\right) \cdot t} \right]$$

$r_0$ wurde mit 8,75mm (0,00875m) gewählt, was einem Durchmesser von 1,75cm entspricht.

Die Siedetemperatur entspricht dabei 98,3°C und entspricht einer Höhe von ca. 500m über dem Meer bei Normaldruck p.0=1013,25mbar Die Ausgangstemperatur entspricht 3.3°C.

Die Temperaturdifferenz zwischen Siedetemperatur und der Ausgangstemperatur des Lebensmittels $\Delta v$ ergibt sich daraus mit -95 K.

Die Dichte $\rho$ wurde mit 1000 kg/m$^3$ gewählt.

Die spezifische Wärmeleitfähigkeit $\lambda$ wurde mit 0,05 W/m*K gewählt.

Der äußere Wärmeübergangswiderstand $R_{se}$ wurde mit 0,006 m$^2$*K/W gewählt.

Die spezifische Wärmekapazität c wurde mit 3500 J/kg*K gewählt. Die Mindesttemperatur $v_{min}$ wurde mit 90°C gewählt.

Aufgrund vieler Messungen an realen Lebensmitteln hat sich gezeigt, dass das hier vorgestellte Berechnungsmodell die Realität in gewünschter Präzision und Einfachheit abbildet.

**Patentansprüche**

1. Verfahren zur Berechnung der Gesamtdauer $t_{ges}$ des Garprozesses von Lebensmitteln mittels Garens durch Wasserdampf gemäß:

$$t_{ges} = t_{kond} + t_{gar}$$

wobei $t_{kond}$ eine Konditionierungszeit des Lebensmittels darstellt, die dann beendet ist, wenn die Kerntemperatur des Lebensmittels, ausgehend von einer Ausgangstemperatur $v_{Ausgangs}$ auf eine Mindestgartemperatur $v_{min}$, bei der der Garprozess für das jeweilige Lebensmittel einsetzt, erhöht wurde, und $t_{gar}$ eine Garzeit des Lebensmittels bedeutet, die in Abhängigkeit vom gewünschten Garzustand gewählt wird.

2. Verfahren nach Anspruch 1, **dadurch gekennzeichnet, dass** $t_{kond}$ in Abhängigkeit von der Art, der Größe, der Masse, des Siedepunktes des Wassers bei gegebenem äußeren Druck, oder eine Kombination mindestens zweier oder sämtlicher der zuvor genannten Parameter bestimmt ist.

3. Verfahren nach einem der vorhergehenden Ansprüche, **dadurch gekennzeichnet, dass** $t_{gar}$ in Abhängigkeit von der Art, der Größe, des Siedepunktes des Wassers bei gegebenem äußeren Druck, oder eine Kombination mindestens zweier oder sämtlicher der zuvor genannten Parameter bestimmt ist.

4. Verfahren nach einem der vorhergehenden Ansprüche, **dadurch gekennzeichnet, dass** zur Gesamtdauer $t_{ges}$ des Garprozesses eine Haltezeit $t_{halt}$ addiert wird, die bevorzugt zwischen 10 und 600 Sekunden, besonders bevorzugt zwischen 120 und 300 Sekunden gewählt wird.

5. Verfahren nach einem der vorhergehenden Ansprüche, **dadurch gekennzeichnet, dass** der Wasserdampf aus Wasser erzeugt wird, das unbehandelt ist oder mit Öl oder Aromastoffen versetzt wurde.

6. Verfahren nach einem der vorhergehenden Ansprüche, **dadurch gekennzeichnet, dass** $t_{kond}$ gemäß

$$t_{kond} := -\ln\left( \frac{1}{2} \cdot \frac{\upsilon_{min} - \upsilon_{SP}}{\upsilon_{Ausgangs} - \upsilon_{SP}} \right) \cdot \frac{1}{D}$$

definiert ist, wobei

$v_{Ausgangs}$ die Ausgangstemperatur des Lebensmittels vor Beginn des Garprozesses,
$v_{min}$ die Mindestumsetztemperatur,
$v_{SP}$ die Siedetemperatur des Wassers bei gegebenem äußerem Druck p und
D eine lebensmittelspezifische Konstante gemäß

$$D := \pi^2 \cdot \frac{1}{c \cdot \rho} \cdot \left( \frac{1}{R_{se} \cdot r_0 + \frac{r_0^2}{\lambda}} \right)$$

darstellt, wobei

c die spezifische Wärmekapazität des Lebensmittels,
$\rho$ die Dichte des Lebensmittels,
$\lambda$ die Wärmeleitfähigkeit des Lebensmittels,
$R_{se}$ der Wärmeübergangswiderstand der Oberfläche des Lebensmittels und
$r_0$ die größte dimensionale Abmessung des Lebensmittels von einem Mittelpunkt, einer Mittellinie oder einer Mittelebene bedeutet.

7. Verfahren nach einem der vorhergehenden Ansprüche, **dadurch gekennzeichnet, dass** $t_{gar}$ gemäß

$$t_{gar} := \frac{t_{Bezug}}{\left[ \left( \frac{1}{Q_{10}} \right)^{\left( \upsilon_{Bezug} - \upsilon_{SP} \right)} \right]^{\frac{1}{10}}} \cdot \text{Garzustand}$$

definiert ist, wobei

$v_{Bezug}$ eine Bezugstemperatur bedeutet, bei der für ein gegebenes Lebensmittel ein ansprechendes Garergebnis erzielt wird,

$t_{Bezug}$ eine Bezugszeitdauer bedeutet, bei der für ein gegebenes Lebensmittel ein ansprechendes Garergebnis erzielt wird, und

Garzustand mit 0,1 < Garzustand < 10 definiert ist, und

$Q_{10}$ gemäß

$$Q_{10} := e^{-10 \cdot \dfrac{\ln\left(\dfrac{t_{Bezug.HT}}{t_{Bezug.NT}}\right)}{\left(\upsilon_{Bezug.HT} - \upsilon_{Bezug.NT}\right)}}$$

definiert ist, wobei

$t_{Bezug.HT}$ die Zeitdauer definiert, nach der ein ansprechendes Garergebnis eines bestimmen Lebensmittels bei einer hohen Temperatur erreicht wird,

$t_{Bezug.NT}$ die Zeitdauer definiert, nach der ein ansprechendes Garergebnis eines bestimmen Lebensmittels bei einer niederen Temperatur erreicht wird,

$v_{Bezug.HT}$ die hohe Temperatur definiert, bei der $t_{Bezug.NT}$ bestimmt wird, und

$v_{Bezug.NT}$ die niedere Temperatur definiert, bei der $t_{Bezug.NT}$ bestimmt wird.

8. Verfahren nach vorhergehendem Anspruch, **dadurch gekennzeichnet, dass** 0,2 < Garzustand < 5 gilt.

9. Verfahren nach einem der vorhergehenden Ansprüche, **dadurch gekennzeichnet, dass** der gegebene äußere Druck p

a) dem atmosphärischen Druck bei gegebener Meereshöhe p(h),

b) einem gegenüber Normalbedingungen erhöhten Druck, bevorzugt 1013 mbar < p < 5 bar, weiter bevorzugt 1013 mbar < p < 5 bar, bevorzugt bei 1,8 bar < p < 2,2 bar, oder

c) einem gegenüber Normalbedingungen erniedrigtem Druck, bevorzugt ... mbar < p < 1013 mbar, weiter bevorzugt 700 mbar < p < 1013 mbar, weiter bevorzugt 800 mbar < p < 950 mbar entspricht.

10. Verfahren zum Garen von Lebensmitteln mittels Wasserdampf, bei dem die Gesamtdauer $t_{ges}$ des Garprozesses gemäß einem Verfahren nach einem der Ansprüche 1 bis 9 berechnet und die Lebensmittel genau oder zumindest für die Zeitdauer $t_{ges}$ oder $t_{ges} + t_{halt}$ gegart werden.

**Claims**

1. Method for calculating the total duration $t_{total}$ of the cooking process of foods by means of cooking with steam according to:

$$t_{total} = t_{cond} + t_{cook}$$

$t_{cond}$ representing a conditioning time of the food which is ended when the core temperature of the food, starting from a starting temperature $v_{start}$, has increased to a minimum cooking temperature $v_{min}$ at which the cooking process for the respective food begins,

and $t_{cook}$ meaning a cooking time of the food which is chosen as a function of the desired cooked state.

2. Method according to claim 1, **characterised in that** $t_{cond}$ is determined as a function of the type, the size, the boiling point of the water at a given external pressure, or a combination of at least two or all of the previously mentioned parameters.

3. Method according to one of the preceding claims, **characterised in that** $t_{cook}$ is determined as a function of the type, the size, the boiling point of the water at a given external pressure, or a combination of at least two or all of the previously mentioned parameters.

4. Method according to one of the preceding claims, **characterised in that** a retaining time $t_{ret}$ is added to the total duration $t_{total}$ of the cooking process, which retaining time is chosen preferably between 10 and 600 seconds, particularly preferred between 120 and 300 seconds.

5. Method according to one of the preceding claims, **characterised in that** the steam is produced from water which is untreated or was mixed with oils or flavourings.

6. Method according to one of the preceding claims, **characterised in that** $t_{cond}$ is defined as follows

$$t_{cond} := -\ln\left( \frac{1}{2} \cdot \frac{v_{min} - v_{BP}}{v_{start} - v_{BP}} \right) \cdot \frac{1}{D}$$

there being represented

$v_{start}$ the starting temperature of the food before beginning the cooking process,
$v_{min}$ the minimum conversion temperature,
$v_{bp}$ the boiling temperature of the water at a given external pressure p and
D a food-specific constant according to

$$D := \pi^2 \cdot \frac{1}{c \cdot \rho} \cdot \left( \frac{1}{R_{se} \cdot r_0 + \frac{r_0^2}{\lambda}} \right)$$

there being meant

c the specific heat capacity of the food,
$\rho$ the density of the food,
$\lambda$ the heat conductivity of the food,
$R_{se}$ the heat transition resistance of the surface of the food and
$r_0$ the greatest dimensional measurement of the food from a centre, a central line or a central plane.

7. Method according to one of the preceding claims, **characterised in that** $t_{cook}$ is defined according to

$$t_{cook} := \frac{t_{reference}}{\left[ \left( \frac{1}{Q_{10}} \right)^{\left( v_{reference} - v_{BP} \right)} \right]^{\frac{1}{10}}} \cdot \text{cooked state}$$

$v_{reference}$ meaning a reference temperature at which an appealing cooking result is achieved for a given food,
$t_{reference}$ meaning a reference time duration at which an appealing cooking result is achieved for a given food, and cooked state being defined with 0.1 < cooked state < 10.

$Q_{10}$ being defined according to

$$Q_{10} := e^{-10 \cdot \frac{\ln\left( \frac{t_{reference.HT}}{t_{reference.LT}} \right)}{\left( v_{reference.HT} - v_{reference.LT} \right)}}$$

$t_{reference.HT}$ defining the time duration after which an appealing cooking result of a specific food at a high temperature is achieved,

$t_{reference.LT}$ defining the time duration after which an appealing cooking result of a specific food at a low temperature is achieved,

$v_{reference.HT}$ defining the high temperature at which $t_{reference.HT}$ is determined, and

$v_{reference.LT}$ defining the low temperature at which $t_{reference.LT}$ is determined.

8. Method according to the preceding claim, **characterised in that** there applies 0.2 < cooked state < 5.

9. Method according to one of the preceding claims, **characterised in that** the given external pressure p corresponds to

a) the atmospheric pressure at a given sea level p(h).
b) a pressure increased relative to normal conditions, preferably 1,013 mbar < p < 5 bar, further preferred 1,013 mbar < p < 5 bar, preferably at 1.8 bar < p < 2.2 bar, or
c) at a pressure lowered relative to normal conditions, preferably 700 mbar < p < 1,013 mbar, further preferred 700 mbar < p < 1,013 mbar, further preferred 800 mbar < p < 950 mbar.

10. Method for cooking foods by means of steam in which the total duration $t_{total}$ of the cooking process is calculated according to a method according to one of the claims 1 to 9 and the foods are cooked precisely or at least for the time duration $t_{total}$ or $t_{total} + t_{ret}$.

**Revendications**

1. Procédé pour calculer la durée totale $t_{ges}$ du processus de cuisson d'aliments, par cuisson à la vapeur d'eau, selon la formule suivante :

$$t_{ges} = t_{kond} + t_{gar}$$

dans laquelle $t_{kond}$ représente le temps de conditionnement de l'aliment, qui est terminé quand la température au coeur de l'aliment est augmentée et passe d'une température de départ $v_{Ausgangs}$ à une température minimale de cuisson $v_{min}$, à laquelle commence le processus de cuisson de l'aliment considéré, et $t_{gar}$ désigne un temps de cuisson de l'aliment, qui est choisi en fonction de l'état de cuisson souhaité.

2. Procédé selon la revendication 1, **caractérisé en ce que** $t_{kond}$ est déterminé en fonction de la nature, de la dimension, de la masse, du point d'ébullition de l'eau haltezeit une pression extérieure donnée, ou d'une combinaison d'au moins deux ou de la totalité des paramètres mentionnés ci-dessus.

3. Procédé selon l'une des revendications précédentes, **caractérisé en ce que** $t_{gar}$ est déterminé en fonction de la nature, de la dimension, du point d'ébullition de l'eau à une pression extérieure donnée, ou d'une combinaison d'au moins deux ou de la totalité des paramètres mentionnés ci-dessus.

4. Procédé selon l'une des revendications précédentes, **caractérisé en ce qu'**on ajoute à la durée totale $t_{ges}$ du processus de cuisson un temps de maintien $t_{halt}$, qui est choisi de préférence entre 10 et 600 secondes, plus particulièrement entre 120 et 300 secondes.

5. Procédé selon l'une des revendications précédentes, **caractérisé en ce que** la vapeur d'eau est produite à partir d'eau non-traitée, ou mélangée précédemment à de huile ou à des substances aromatisantes.

6. Procédé selon l'une des revendications précédentes, **caractérisé en ce que** $t_{kond}$ est défini selon la formule suivante :

$$t_{kond} := -\ln\left(\frac{1}{2} \cdot \frac{v_{min} - v_{SP}}{v_{Ausgangs} - v_{SP}}\right) \cdot \frac{1}{D}$$

où

$v_{Ausgangs}$ est la température de départ de l'aliment avant le début du processus de cuisson,
$v_{min}$ est la température minimale de réaction,
$v_{sp}$ est la température d'ébullition de l'eau à une pression extérieure définie p, et
D représente une constante spécifique de l'aliment, selon la formule suivante :

$$D := \pi^2 \cdot \frac{1}{c \cdot \rho} \cdot \left( \frac{1}{R_{se} \cdot r_0 + \dfrac{r_0^2}{\lambda}} \right)$$

où
c est la capacité calorifique spécifique de l'aliment,
$\rho$ est la masse volumique de l'aliment,
$\lambda$ est la conductibilité thermique de l'aliment,
$R_{se}$ est la résistance à la transmission de chaleur de la surface de l'aliment, et
$r_o$ est la mesure dimensionnelle la plus grande de l'aliment, à partir d'un point central, d'une ligne centrale ou d'un plan central.

**7.** Procédé selon l'une des revendications précédentes, **caractérisé en ce que** $t_{gar}$ est défini selon la formule suivante :

$$t_{gar} := \frac{t_{Bezug}}{\left[ \left( \dfrac{1}{Q_{10}} \right)^{\left( v_{Bezug} - v_{SP} \right)} \right]^{\frac{1}{10}}} \cdot \text{Garzustand}$$

où

$v_{Bezug}$ représente une température de référence, à laquelle on obtient pour un aliment donné un résultat de cuisson agréable,
$t_{Bezug}$ représente une durée de référence, pour laquelle on obtient pour un aliment donné un résultat de cuisson agréable, et
Garzustand (*Garzustand = l'état de cuisson*) est défini par 0,1 < Garzustand < 10, et
$Q_{10}$ est défini selon la formule suivante :

$$Q_{10} := e^{-10 \cdot \frac{\ln\left( \dfrac{t_{Bezug.HT}}{t_{Bezug.NT}} \right)}{\left( v_{Bezug.HT} - v_{Bezug.NT} \right)}}$$

où
$t_{Bezug.HT}$ définit le laps de temps au terme duquel on atteint un résultat de cuisson agréable d'un certain aliment à une température élevée,
$t_{Bezug.NT}$ définit le laps de temps au terme duquel on atteint un résultat de cuisson agréable d'un certain aliment à une basse température, et

$v_{Bezug.HT}$ définit la température élevée à laquelle est déterminé $t_{Bezug.NT}$, et

$v_{Bezug.NT}$ définit la basse température à laquelle est déterminé $t_{Bezug.NT}$.

**8.** Procédé selon la revendication précédente, **caractérisé en ce que** 0,2 < Garzustand < 5 (*Garzustand = état de cuisson*).

**9.** Procédé selon l'une des revendications précédentes, **caractérisé en ce que** la pression extérieure définie p correspond

a) à la pression atmosphérique à une altitude donnée au-dessus du niveau de la mer p(h),
b) à une pression élevée par rapport à des conditions normales, de préférence 1013 mbar < p < 5 bar, plus particulièrement 1013 mbar < p < 5 bar, de préférence à 1,8 bar < p < 2,2 bar, ou
c) à une pression abaissée par rapport à des conditions normales, de préférence ... mbar < p < 1013 mbar, plus particulièrement 700 mbar < p < 1013 mbar, préférentiellement 800 mbar < p < 950 mbar.

**10.** Procédé pour la cuisson d'aliments à l'aide de vapeur d'eau, dans lequel la durée totale $t_{ges}$ du processus de cuisson est calculée par un procédé selon l'une des revendications 1 à 9, et les aliments sont cuits exactement ou au moins pendant le laps de temps $t_{ges}$ ou $t_{ges} + t_{halt}$.

## Figur 1

# Figur 2

| Temperatur [ °C] | Dampfdruck [mbar] |
|---|---|
| 65 | 250,1 |
| 70 | 311,5 |
| 75 | 385,5 |
| 80 | 473,4 |
| 85 | 577,9 |
| 90 | 701,0 |
| 95 | 845,1 |
| 100 | 1013,00 |
| 105 | 1207,70 |
| 110 | 1432,28 |
| 115 | 1690,08 |
| 120 | 1984,87 |
| 125 | 2320,48 |
| 130 | 2700,58 |
| 135 | 3128,65 |
| 140 | 3613,37 |
| 145 | 4154,31 |
| 150 | 4759,07 |
| 155 | 5432,72 |
| 160 | 6179,30 |
| 165 | 7005,91 |
| 170 | 7918,62 |
| 175 | 8922,50 |

Figur 3

Figur 4